(19) Europäisches Patentamt

European Patent Office

Office européen des brevets

(11) Veröffentlichungsnummer: **0 246 522 B1**

(12) **EUROPÄISCHE PATENTSCHRIFT**

(45) Veröffentlichungstag der Patentschrift: **19.08.92**

(51) Int. Cl.5: **H02P 1/56**, H02P 6/02

(21) Anmeldenummer: **87106747.6**

(22) Anmeldetag: **08.05.87**

(54) **Drehzahlsteuerung.**

(30) Priorität: **17.05.86 DE 3616781**

(43) Veröffentlichungstag der Anmeldung:
**25.11.87 Patentblatt 87/48**

(45) Bekanntmachung des Hinweises auf die
Patenterteilung:
**19.08.92 Patentblatt 92/34**

(84) Benannte Vertragsstaaten:
**AT BE CH DE ES FR GB GR IT LI LU NL SE**

(56) Entgegenhaltungen:
**US-A- 4 518 899**

**PATENT ABSTRACTS OF JAPAN, Band 10,
Nr. 75 (E-390)[2132], 25. März 1986; & JP - A -
60 219 988**

**PATENT ABSTRACTS OF JAPAN, Band 7, Nr.
132 (E-180)[1277], 9. Juni 1983; & JP - A - 58
46885**

**PATENT ABSTRACTS OF JAPAN, Band 7, Nr.
148 (E-184)[1293], 29. Juni 1983; & JP - A - 58
58890**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Gleim, Guenter, Dipl.-Ing.
Oberer Sonnenbühl 22
W-7730 Villingen 22(DE)**

**Beschreibung**

Elektronisch kommutierte Gleichstrommotore werden wegen ihrer geringen Geräuschentwicklung und wegen ihrer guten Steuerbarkeit, z. B. mit Hilfe von Mikroprozessoren, überall dort eingesetzt, wo Präzisionsantriebe gefordert sind. Sie sind im allgemeinen mit Permanentmagneterregung in Rotor- oder Statorteil versehen. Dabei werden vorzugsweise mehrpolige Permanentmagnete in Ringform mit einander abwechselnder Polarität eingesetzt. Über einen axialen oder radialen Luftspalt getrennt, stehen den Magnetpolen die kommutierbaren Spulen gegenüber. Sie sind je nach Auslegung des Motors zwei- oder mehrsträngig ausgeführt. Für die Steuerung sind die Motore mit berührungslos arbeitenden Sensoren und damit verbundenen Schaltungen für die Phasenlageerkennung des Rotors ausgerüstet. Diese Sensoren arbeiten z. B. optoelektronisch oder mit Hilfe von Hallelementen.

Bei bestimmten Anwendungen ist es erforderlich, miteinander zusammenwirkende Motore phasensynchron anlaufen zu lassen und auch während des weiteren Betriebes teilweise phasensynchron zu steuern.

Es ist Aufgabe der Erfindung, eine derartige phasensynchrone Drehzahlsteuerung aufzuzeigen.

Diese Aufgabe wird gemäß der Erfindung durch die im Anspruch 1 aufgeführten Merkmale gelöst. Vorteilhafte Weiterbildungen der Erfindung sind in den Unteransprüchen beschrieben.

Im Prinzip wird bei Stillstand der Motore für den Anlauf gleichzeitig an gleiche Spulenstränge in quasi Parallelansteuerung so lange eine Spannung gleicher Polung angelegt, bis die Rotore sich so weit ausgerichtet haben, daß der nächste Motorstrang angesteuert werden kann. Die erfolgte Ausrichtung wird von den Sensoren für die Phasenlageerkennung an eine Steuereinheit gemeldet. Erst wenn alle Sensoren übereinstimmend ihre Meldung abgegeben haben, wird durch die Steuereinheit, die eine Speichereinrichtung für die Daten der eingestellten Winkel aufweist, der nächste Spulenstrang angeschaltet, d.h. der nächste Kommutierungsschritt ausgelöst. Eine erneute Weiterschaltung der Spannung an den nächstfolgenden Spulenstrang erfolgt wiederum erst dann, wenn alle Phasenlagenerkenungschaltungen übereinstimmend ihre Meldung abgegeben haben. Das heißt, die Phasenlagemeldung, die zeitlich als letzte erfolgt, bewirkt die Weiterschaltung, so daß die Fortschaltgeschwindigkeit für alle Motore von dem langsamsten Motor abhängig ist.

Die Erfindung wird im folgenden an einem Ausführungsbeispiel anhand der Figuren erläutert. Darin zeigen:

Fig. 1    die Ausrichtung eines Rotors bei beliebiger Rotorstellung für den Anlauf.

Fig. 2    ein Blockschaltbild für den synchronen Antrieb von zwei Motoren.

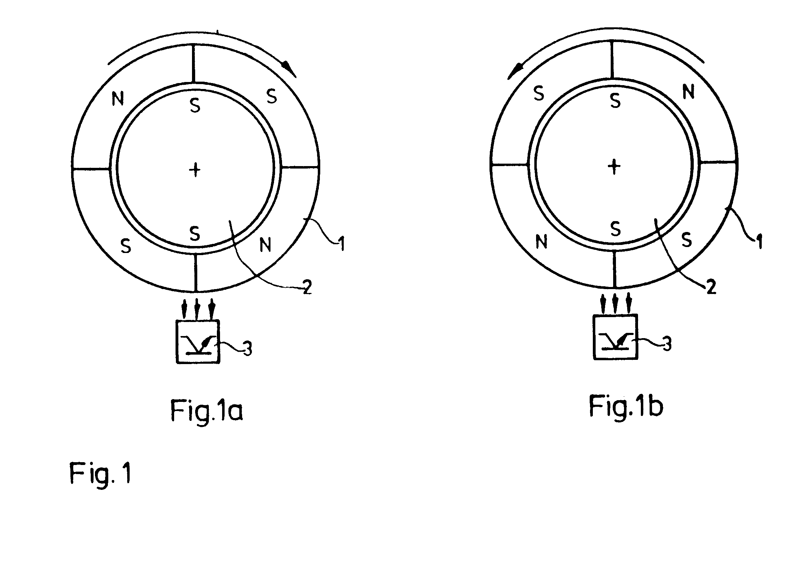

Fig. 1 zeigt die Ausrichtung eines Rotors bei beliebiger Rotorstellung für den Anlauf. Es ist ein zweisträniger Motor mit zwei Magnetpolpaaren als Außenläufer dargestellt. Bei einem geforderten Anlauf mehrerer gleichartiger Motore gleicher Polzahl mit unterschiedlicher Anfangswinkelstellung der einzelnen Rotore ist es erforderlich, von einem definierten Anfangszustand auszugehen. Dieser Zustand wird erreicht, wenn einem gleichartigen Motorstrang aller synchron zu steuernden Motore gleichzeitig eine Spannung gleicher Polung zugeführt wird.

In Fig. 1a werden durch diese Spannung in Stator 2 zwei Südpole erzeugt. Die Permanentmagnete im Rotor 1, dessen Stellung bei Motorstillstand gezeichnet ist, werden dadurch in Pfeilrichtung, die auch gleichzeitig Motordrehrichtung sein soll, dem Südpol im Stator gegenüberstehend ausgerichtet. Durch den Sensor 3, der z. B. aus einem Hallelement besteht, wird die erfolgte Ausrichtung an die Steuerelektronik weitergemeldet.

Fig. 1b zeigt eine Rotorstellung bei Motorstillstand bei der der Nordpol des Rotors, in Motordrehrichtung gesehen, schon über den durch die Statorspulen erzeugten Südpol hinausgedreht ist. Bei diesem Motor wird eine Ausrichtung des Rotors in Pfeilrichtung entgegen zu der Motordrehrichtung von Fig. 1a erreicht.

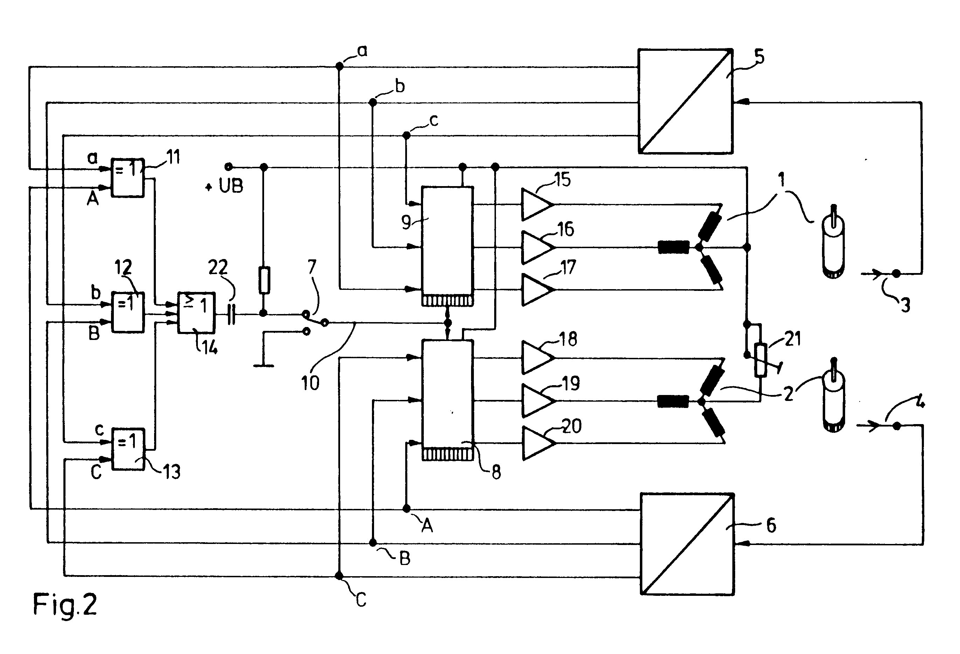

Fig. 2 zeigt ein Blockschaltbild für den synchronen Antrieb zweier gleichartiger, elektronisch kommutierter Motore. Die Motore 1 und 2 sind dreisträngig. Beide Motore sind mit Sensoren 3,4 für die Erkennung der Phasenlage der Rotore ausgerüstet, die als Optokoppler arbeiten und einen Strichcode auswerten, der am Rotorumfang angebracht ist. Das Ausgangssignal von Optokoppler 3 wird einem Umsetzer 5 und das Signal von Optokoppler 4 einem Umsetzer 6 zugeführt. Durch Auswertung des Strichcodes innerhalb der Umsetzer, z. B. mit Hilfe eines Mikroprozessors, kann die Zuordnung der Winkellage der Rotore erkannt werden. Die Umsetzer haben entsprechend der Strangzahl der Motore drei Ausgänge, die jeweils dann gleichzeitig ein Signal logisch 1 abgeben, wenn der Rotor seine Sollposition entsprechend Fig. 1, nämlich Gegenüberstellung von Nord- und Südpol, erreicht hat. Für den phasensynchronen Anlauf und auch für eine phasensynchrone Steuerung nach dem Anlauf ist Schalter 7 in der gezeichneten Schalterstellung fixiert. Dadurch wird sichergestellt, daß die Steuergeräte 8 und 9 über die gemeinsame Steuerleitung 10 gleichzeitig erst dann eine Weiterschaltung der Motorkommutierung bewirken, wenn ein entsprechender Übernahmeimpuls auf dieser Leitung erscheint. Ausgelöst wird dieser Impuls von dem Ausgangszustand einer ODER-Schaltung 14 in Verbindung mit dem Ladezustand von Kondensator 22. Die ODER-Schaltung 14 wird durch eine Kombination von drei EX-ODER-Schaltungen 11,12,13, deren Ausgänge mit dem Eingang der ODER-Schaltung 14 verbunden sind, angesteuert. Jeder erste Eingang der Ex-ODER-Schaltungen a,b,c ist mit dem jeweiligen Ausgang von Umsetzer 5 und jeder zweite Eingang der Ex-ODER-Schaltungen A,B,C ist mit dem entsprechenden Ausgang von Umsetzer 6 verbunden. Durch diese Anordnung wird sichergestellt, daß die Steuergeräte 8 und 9 in quasi Parallelbetrieb arbeiten und eine synchrone Ausgabe des nächsten Kommutierungsschrittes bewirken. Die Eingänge der Steuergeräte 8 und 9 sind mit den entsprechenden Ausgangsleitungen der Umsetzer 5 und 6 verbunden. Sie sind mit einem, jedem Strang zugeordneten, internen Speicher versehen, da eine Weiterschaltung bei synchronem Betrieb erst dann erfolgen kann, wenn der langsamere Motor seine Sollstellung erreicht hat. Es müssen also die Aussteuersignale des schnelleren Motors so lange aufrecht erhalten bleiben, bis der langsamere Motor die Übernahme für den nächten Kommutierungsschritt am Ausgang der ODER-Schaltung 14 auslöst.

Den Steuergeräten 8 und 9 sind für jeden Motorstrang Verstärker 15 bis 20 nachgeschaltet, die für die Leistungsanpassung zur Steuerung der einzelnen Stränge ausgelegt sind.

Für eine gewollte asynchrone Steuerung der Motore wird Schalter 7 nach Masse geschaltet. Dadurch werden die Steuergeräte 8 und 9 aus dem zwangssynchronisierten Quasiparallelbetrieb, in Einzelbetrieb geschaltet. In dieser Schalterstellung wird die Steuerung der Kommutierung direkt für jeden Motor getrennt durchgeführt, so daß z.B. auch gewollte Drehzahlunterschiede mittels Regler 21 eingestellt werden können.

Im Synchronbetrieb sind dagegen die Drehzahlen der beiden Motore 1 und 2 von der Einstellung von Widerstand 21 nur so lange abhängig, wie Motor 2 langsamer als Motor 1 läuft.

**Patentansprüche**

1. Drehzahlsteuerung gleichartiger, zwei- oder mehrsträngiger, elektronisch kommutierter Gleichstrommotore (1,2) mit Sensoren (3,4) zur Phasenlageerkennung, dadurch gekennzeichnet, daß für einen phasensynchronen Anlauf gleichzeitig an gleiche Motorstränge eine Spannung angelegt und für eine phasensynchrone Steuerung jeder weitere Kommutierungsschritt erst dann ausgelöst wird, wenn alle Sensoren gleiche Phasenlage der Rotore melden.

2. Drehzahlsteuerung nach Anspruch 1, dadurch gekennzeichnet,daß für die Weiterschaltung der Kommutierung Speicher (8,9) vorgesehen sind, die eine gemeinsame Steuerleitung (10) zur Auslösung des nächsten Kommutierungsschrittes aufweisen.

3. Drehzahlsteuerung nach Anspruch 2, dadurch gekennzeichnet,daß die Auslösung eines Kommutierungsschrittes durch die Steuerleitung (10) mittels eines Impulses durch Ladungsänderung eines Kondensators (22) erfolgt.

4. Drehzahlsteuerung nach Anspruch 3, dadurch gekennzeichnet, daß die Ladungsänderung des Kondensators (22) durch die Zustandsänderung einer logischen Verknüpfungsschaltung erfolgt.

**Claims**

1. Speed control for identical, two or more phase windings electronically commutated direct current motors (1,2) with sensors (3,4) to recognise the phase relation, characterised in that for synchronised-phase starting a voltage is applied simultaneously to the same phase windings of the motors, and for synchronised-phase control of every further commutation step it is released only when all the sensors signal the same phase relation of the rotors.

2. The speed control of claim 1, characterised in that memories (8,9) are provided to transfer the commutation, the memories having a joint control line (10) to trigger the next commutation step.

3. The speed control of claim 2, characterised in that a commutation step is triggered by the control line (10) by means of a pulse, by changing the charge of a capacitor (22).

4. The speed control of claim 3, characterised in that the charge of the capacitor (22) is changed by changing the state of a logic element.

**Revendications**

1. Commande de la vitesse de moteurs à courant continu (1, 2) commutés électroniquement de même type, à deux ou plusieurs branches, avec des capteurs (3, 4) pour la reconnaissance de la relation de phase, **caractérisée en ce qu'**une tension est appliquée pour un démarrage en synchronisation de phase simultanément sur des branches pareilles de moteur et que tout autre pas de commutation pour une commande en synchronisation de phase n'est déclenché que lorsque tous les capteurs annoncent la même relation de phase des rotors.

2. Commande de la vitesse selon la revendication 1, **caractérisée en ce que** pour la poursuite de la commutation des mémoires (8, 9) sont prévues qui présentent une ligne de commande commune (10) pour déclencher le prochain pas de ommutation.

3. Commande de la vitesse selon la revendication 2, **caractérisée en ce que** le déclenchement d'un pas de commutation est effectué par la ligne de commande (10) au moyen d'une impulsion par variation de la charge d'un condensateur (22).

4. Commande de la vitesse selon la revendication 3, **caractérisée en ce que** la variation de la charge du condensateur (22) est effectuée par la modification d'état d'un circuit d'enchaînement logique.

Fig.1a

Fig.1b

Fig.1

Fig.2

EP 0 246 522 B1